# EUROPEAN PATENT APPLICATION

(11) **EP 4 782 941 A1**
(43) Date of publication of application: **29.07.2026**
(21) Application number: 24890879.0
(22) Date of filing: 05.11.2024
(51) Int. Cl.: G05B 11/01, H02J 1/00, H02S 50/10, G05B 19/05, G05B 1/01, H02H 1/04

(54) **DEVICE FOR CONTROLLING VOLTAGE AND DISCONNECTING PHOTOVOLTAIC MODULES FOR STRING**

(30) Priority: 13.11.2023 ES 202330930
(71) Applicant: ENERGÍAS RENOVABLES ERÍN, S.L., 50197 Zaragoza (ES)
(72) Inventor: LÓPEZ CACHO, Ernesto, 50197 Zaragoza (ES); ERDOCIAIN GIL, Héctor, 50197 Zaragoza (ES)
(74) Representative: Schäfer, Matthias W.
(86) International application number: PCT/ES2024/070687
(87) International publication number: WO 2025/104357

(57) **Abstract**

The present invention relates to a voltage control and disconnection device to reduce the voltage of photovoltaic module strings when the weather conditions are such that the voltage can rise above 1500 VDC, having, for this purpose, three inputs and one output, which connects to a photovoltaic module and to its adjacent photovoltaic module, the output leading to the inverter. The device measures the voltage of the photovoltaic module and, when a limit voltage that is internally preset based on the voltage of the module and the number of modules of the string is exceeded, it disconnects this photovoltaic module, reducing the string by one module.

The disclosed invention provides the main advantage of better optimising the strings, at a much lower economic cost and with practically zero losses in dissipated power, while increasing the generation of daily energy of the photovoltaic farm, making it possible to always operate at the optimal voltage for the inverter.

## Description

This specification relates, as its title indicates, to a voltage control device and disconnecting photovoltaic modules for string, used to reduce the voltage of the strings when the weather conditions are such that the voltage can rise above 1500 VDC, having for this purpose three inputs and an output, which connects to a photovoltaic module and its adjacent photovoltaic module, with the output, which will be positive or negative depending on the connection, leading to the inverter. The device measures the voltage of the photovoltaic module and, when a limit voltage that is internally preset based on the voltage of the module and the number of modules of the string is exceeded, it disconnects this photovoltaic module, reducing the string by one module.

### Field of the invention

The invention relates to the field of photovoltaic installations, and more specifically to voltage control devices and disconnecting photovoltaic modules for string.

### Current state of the art

Photovoltaic farms are usually composed of one or more strings. "Strings" refer to groups of several photovoltaic modules connected in series to each other, adding their voltages together to achieve the maximum voltage that the site allows given its environmental conditions. It is important that this voltage is as high as possible, to minimise wiring losses and increase performance by making the unit work with the inverter at its optimum power point. It is also of interest that this voltage is at most 1500 VDC, since this is the maximum limit of what is considered Low Voltage in DC voltage. Should it exceed 1500 VDC, the legal regulations applicable to the installation would be different, with different technical requirements and making the installation more expensive, so that photovoltaic farms are always designed to work in Low Voltage.

However, the photovoltaic modules have temperature coefficients that mean that when the ambient temperature falls, the module's voltage rises by a percentage so that the minimum temperature has to be taken into account, which has occurred in the photovoltaic farm site, and bearing in mind the temperature variations to decide how many modules will make up the string. This usually requires sizing each string with an appropriate safety margin so that, in the worst case in terms of weather conditions, the voltage supplied is always less than 1500 VDC. This safety margin means that, when operating in normal weather conditions, which are the most common, the total voltage produced is less than 1500 VDC, so that the performance of the installation and the inverter is not optimal. It is oversized for safety reasons that costs money both in installation and in production.

To resolve this problem, there are solutions such as those disclosed in WO202104845 "*Sistema de potencia con optimizador de FV para el suministro de potencia desde una instalación fotovoltaica*", ES2924858 "*Sistema de control de generación de energía fotovoltaica*", and EP3361631 "*Current-voltage curve scan method for photovoltaic module and optimiser*" that disclose power optimizer devices that, through DC-DC converters installed in each photovoltaic module, regulate the voltage provided at all times to obtain the best performance of that module. But it is a solution that requires a large number of circuits of great complexity, and with a high electricity consumption, which has to be dissipated in the form of heat by means of thermal radiators, causing power losses and making the installation more expensive, so it is principally only applicable for domestic installations.

Solutions are also known such as those disclosed in WO201008780 "*Method for reconfigurably connecting photovoltaic panels in a photovoltaic array*", US2012025621 "*Device, system and method for sectioning and coupling multiple photovoltaic arrays*", and CN112953385A "*Photovoltaic system controller, photovoltaic system and control method*", which allow dynamically varying the series-parallel interconnection of the solar modules in a centralised manner depending on the production conditions, but this forces a complex and expensive non-standard wiring of the photovoltaic modules, also making the installation more expensive.

No device capable of disconnecting a photovoltaic module from the string is currently known in the state of the art in the event that the voltage of the string rises and can exceed the limit of 1500 VDC.

### Description of the invention

In order to resolve the currently existing problem for reducing the voltage of strings when the weather conditions are such that it can rise above 1500 VDC, the voltage control device and disconnecting photovoltaic modules for string object of the present invention has been devised, which is a three-input and one-output equipment, which is connected to a photovoltaic module, preferably the last or the first, and its adjacent photovoltaic module, leading the output, which will be positive or negative depending on the connection, to the inverter. The device measures the voltage of the photovoltaic module and, when it detects that a limit voltage that is internally preset based on the voltage of the module and the number of modules of the string is exceeded, it switches disconnecting the photovoltaic module, reducing the string by one module.

To this end, the voltage control device and disconnecting photovoltaic modules for string comprises
- a switching module,
- a control module equipped with internal memory for the storage of the operating parameters, based on the voltage of the photovoltaic module and the number of photovoltaic modules of the string,
- a voltage measurement module,
- a PLC-type (acronym for Power Line Communications) communications module referring to any type of communication performed through different protocols or technologies that use electric power transmission lines to also transmit signals for communication purposes,
- a DC power supply module (13) for the above modules, obtained from the voltage generated by the photovoltaic module of the string whereto the control device is connected, whether or not it is connected to the string, and
- a plurality of connections comprising at least
   two input connections to the terminals of the photovoltaic module whereto the control device is connected,
   an input connection to the photovoltaic module of the string adjacent to the photovoltaic module whereto the control device is connected, and
   an output connection to an inverter.

It is envisaged that it can also, optionally, incorporate a short-range wireless communications module, such as, for example, RFID, NFC, Bluetooth or similar, to be able to send information to an external equipment on the operation of the device, such as number of connection-disconnection cycles, times, statistical information, etc...

Although it will preferably be connected at the end of the string, at the positive output thereof, or at the beginning of the string, at the negative output thereof, it is also provided that it is alternatively possible to install more than one control device in each string, in several photovoltaic modules of the same string, even combining in the same string devices for positive output and for negative output in the string corresponding to both embodiments, in the event that greater regulation margin is needed.

The switching module has a deactivated state, wherein
- the output connection is electrically connected to the input connection connected to the terminal of the photovoltaic module whereto the control device is connected,
- the input connection connected to the other terminal of the photovoltaic module whereto the control device is connected is electrically connected to the input connection connected to the terminal of the photovoltaic module adjacent to the photovoltaic module whereto the control device is connected,
the photovoltaic module whereto the control device is connected being connected in series to the adjacent photovoltaic module, and thus electrically forming part of the string.

The switching module also has an activated state, wherein
- the output connection is electrically connected to the input connection connected to the terminal of the photovoltaic module adjacent to the photovoltaic module whereto the control device is connected,
- the input connection connected to the terminal of the photovoltaic module whereto the control device is connected is electrically disconnected from the input connection connected to the other terminal of the adjacent photovoltaic module,
the photovoltaic module whereto the control device is connected being electrically disconnected from the adjacent photovoltaic module, and therefore electrically disconnected from the string.

This voltage control device and disconnecting photovoltaic modules for string, has a characteristic operating method which comprises
- a preliminary step of programming the operating parameters in the internal memory of the control module, by means of the PLC-type communication module, from an external device, subsequently not requiring the communications for their functionality once installed, which can optionally be used to send information on the operation of the device to an external monitoring device,
- a step of measuring the voltage supplied by the photovoltaic module whereto it is connected, which is communicated to the control module,
- if the value of the measured voltage is higher than that indicated in the operating parameters programmed in the internal memory, the control module performs a step of placing the switching module in the activated state, electrically disconnecting the photovoltaic module from the string, and therefore reducing the total output voltage of the string of photovoltaic modules,
- if the value of the measured voltage is lower than that indicated in the operating parameters programmed in the internal memory, the control module performs a step of putting the switching module in the deactivated state, electrically connecting the photovoltaic module of the string, and therefore giving the maximum output voltage of the string of photovoltaic modules,
cyclically repeating the voltage measurement step, and the following steps.

### Advantages of the invention

This voltage control device and disconnecting photovoltaic modules for string that is presented provides multiple advantages over the systems currently available, the most important being that it allows a better optimisation of the photovoltaic module strings, with much lower economic cost and practically zero losses in dissipated power.

Another added advantage of using this device is that it increases the daily power generation of the photovoltaic farm since, as it has a higher voltage, the string will reach the inverter work window much earlier, so the inverter will start earlier in the morning and switch off later.

It is also important to note that the equipment is powered from the string's own photovoltaic module, which implies that it can be placed both in existing farms and in new farms, without the need to complicate the installation and with hardly any new wiring.

It should be noted that many wind farms already in production on the market currently have a serious problem because the strings were rushed in the original design and construction and currently exceed 1500 VDC at some times, jeopardising the guarantees and the operation of the products of those projects.

It is also important to note that in new construction projects with this device, more or less 3.5% less string is required for the same power and that implies an additional saving of at least 3% in structure, 3% in wiring, 3% in civil work, etc.

Likewise, the use of PLC communications avoids the use of connectors or additional wiring for the programming of usage parameters.

### Description of the figures

In order to better understand the object of the present invention, a preferred practical embodiment of a voltage control device and disconnecting photovoltaic modules for string is portrayed in the attached drawing.
In this context Figure -1- shows a simplified block diagram of the device, in the preferred embodiment for connection at the end of the string, in its positive output towards the inverter.
Figure -2- shows an example of a string of photovoltaic modules with the device connected, in the preferred embodiment for connection at the end of the string, at its positive output to the inverter.
Figure -3- shows an expanded detail of the example of string of photovoltaic modules with the device connected, detailing only the photovoltaic modules directly connected to the device, in the preferred embodiment for connection at the end of the string, in its positive output to the inverter.
Figure -4- shows an example of a string of photovoltaic modules with the device connected, in the preferred embodiment for connection to the start of the string, at its negative output to the inverter.
Figure -5- shows an expanded detail of the example of string of photovoltaic modules with the device connected, detailing only the photovoltaic modules directly connected to the device, in the preferred embodiment for connection at the start of the string, at its negative output to the inverter.

### Preferred embodiment of the invention

The constitution and characteristics of the invention may be better understood with the following description made with reference to the attached figures. In these figures, a string formed by nine photovoltaic modules that we have referenced as (2a, 2b, 2c, 2d, 2e, 2f, 2g, 2h and 2i) has been used, solely by way of example. When we refer to a specific module we will use any of those references depending on its position in the string, and when we refer to a photovoltaic module in general, we will refer to it as (2).

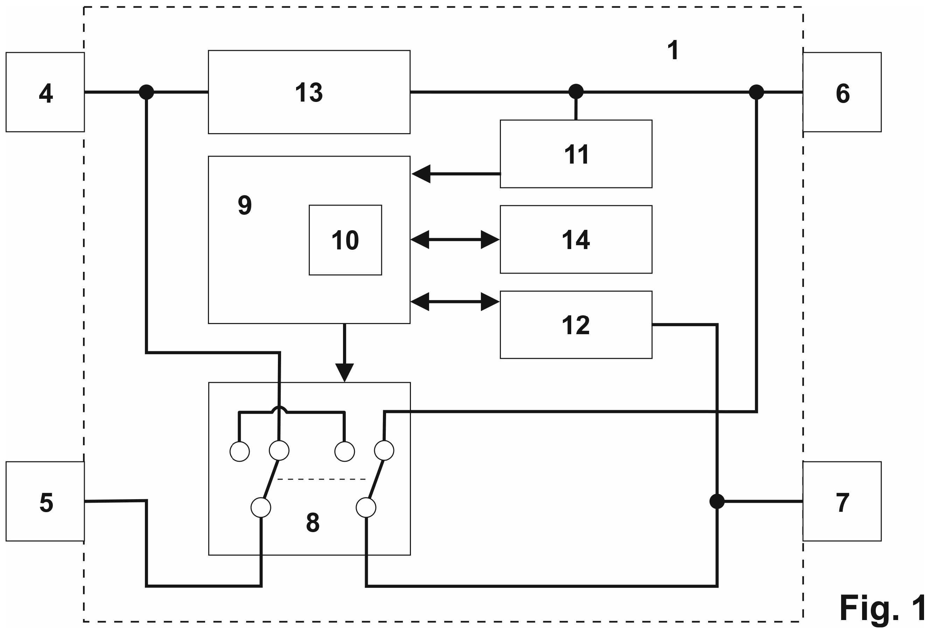

As can be seen in figure 1, 3 and 5, the voltage control device (1) and disconnecting photovoltaic modules for string (2) comprises
- a switching module (8), preferably chosen from the group formed by electromechanical, such as relays, or solid-state switches, such as thyristors, triacs, solid-state relays,
- a control module (9) equipped with internal memory (10) for the storage of operating parameters based on the voltage of the photovoltaic module (2) and the number of photovoltaic modules (2) of the string,
- a voltage measurement module (11),
- a communications module (12) of the PLC type, with PLC referring to any type of communication performed by means of different protocols or technologies that use electric power transmission lines to also transmit signals for communication purposes,
- a DC power supply module (13) for the above modules, obtained from the voltage generated by the photovoltaic module (2a, 2i) of the string whereto the control device (1) is connected, and
- a plurality of connections comprising at least
   two input connections (4,6) to connect to the terminals of the photovoltaic module (2a, 2i) whereto the control device (1) is connected,
   an input connection (5) for connecting to the photovoltaic module (2) of the string adjacent to the photovoltaic module (2b, 2h) whereto the control device (1) is connected, and
   an output connection (7) for connecting to an inverter (3).

It is envisaged that it may optionally also incorporate a short-range wireless communications module (14), preferably RFID, NFC, Bluetooth or similar, to be able to send information to external equipment on the operation of the control device (1), such as the number of connection-disconnection cycles, times, statistical information, etc.

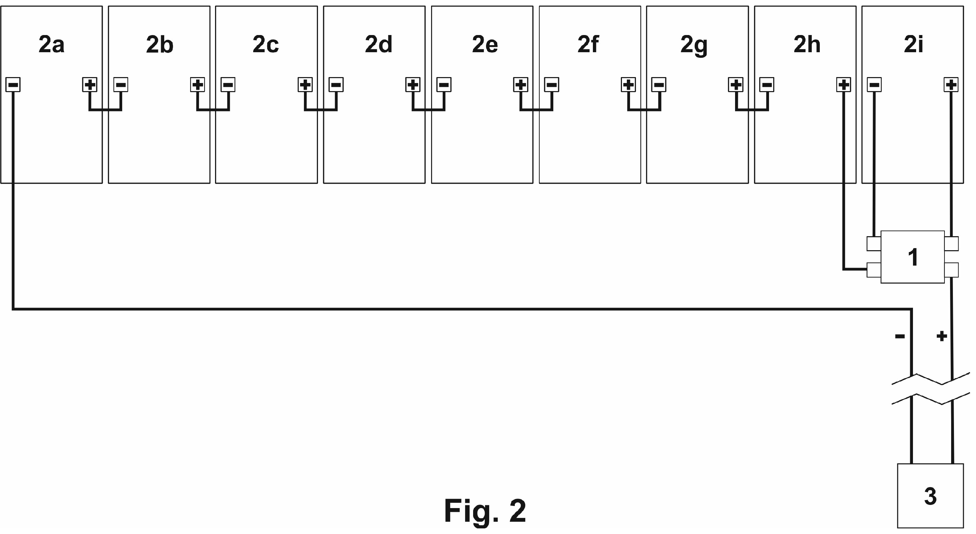

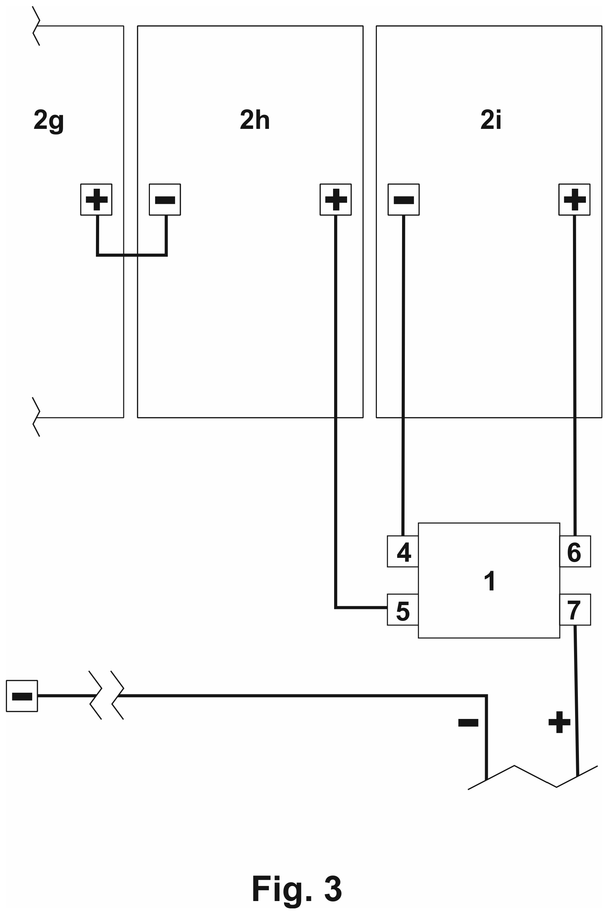

A preferred embodiment is provided, as illustrated in Figures 2 and 3, wherein the connection of the control device (1) to the string is performed in the last photovoltaic module (2i), corresponding to the positive output towards the inverter (3), with the following being connected:
an input connection (4) connected to the negative terminal of the last photovoltaic module (2i) of the string,
the input connection (6) connected to the positive terminal of the last photovoltaic module (2i) of the string,
the input connection (5) connected to the positive terminal of the penultimate photovoltaic module (2h) of the string, and
the output connection (7) being positive and being connected to the inverter (3),
the last photovoltaic module (2i) being separated from the series connection of the string, and therefore the positive terminal of the penultimate photovoltaic module (2h) and the negative terminal of the last photovoltaic module (2i) of the string are not directly connected to each other.

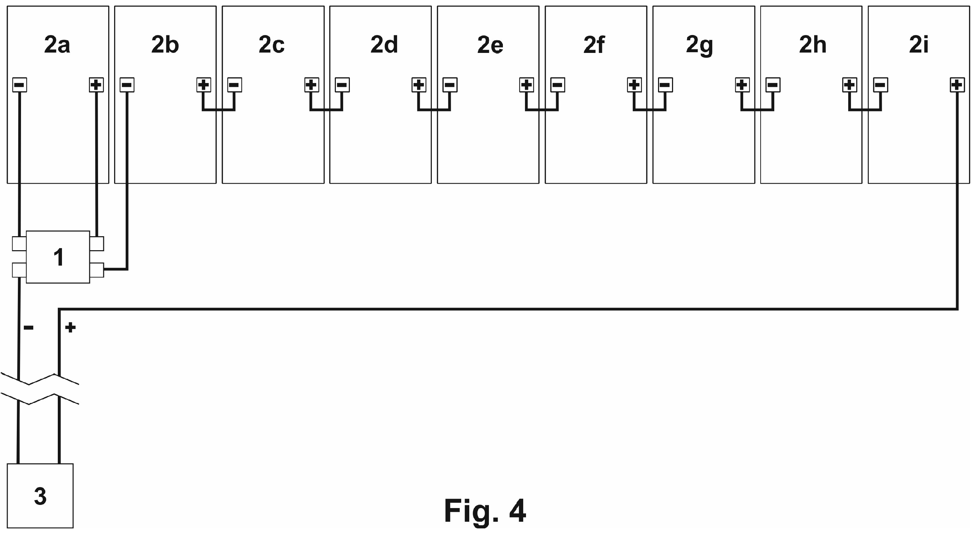

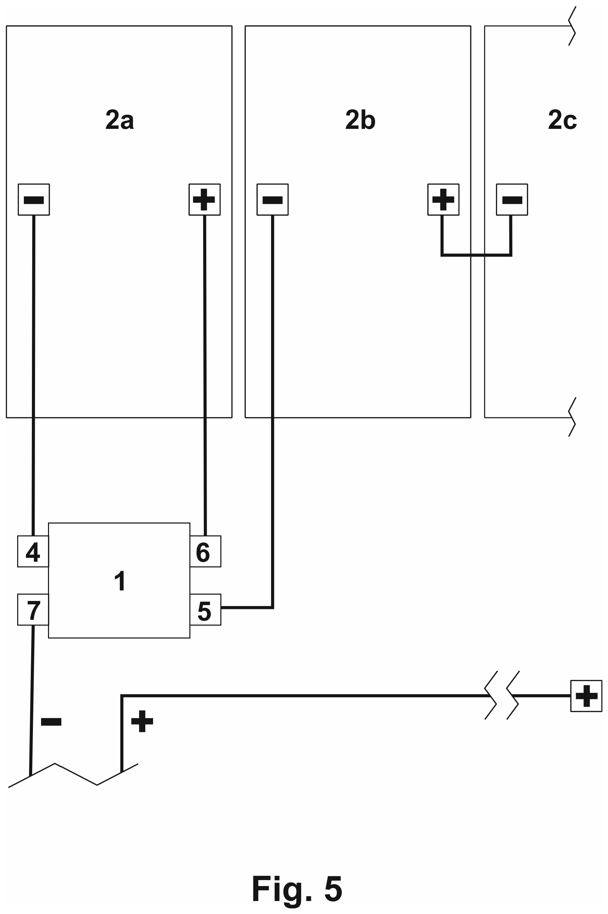

An alternative embodiment is provided, as illustrated in figures 4 and 5, wherein the connection of the control device (1) to the string is performed in the first photovoltaic module (2a), corresponding to the negative output towards the inverter (3), with the following being connected
the input connection (4) connected to the positive terminal of the first photovoltaic module (2a) of the string,
the input connection (6) connected to the negative terminal of the first photovoltaic module (2a) of the string,
the input connection (5) connected to the negative terminal of the second photovoltaic module (2b) of the string, and
the output connection (7) being negative and being connected to the inverter (3),
the first photovoltaic module (2a) being separate from the series connection of the string, and therefore the negative terminal of the second photovoltaic module (2b) and the positive terminal of the first photovoltaic module (2a) of the string are not directly connected to each other.

It is envisaged that, alternatively, it is possible to install more than one control device (1) in each string, in several photovoltaic modules (2) of the same string, even combining in the same string devices for positive output and for negative output in the string corresponding to both embodiments, in the event that greater margin of regulation is needed.

The switching module (8) has a deactivated state, wherein
- the output connection (7) is electrically connected to the input connection (6) connected to the terminal of the photovoltaic module (2a, 2i) whereto the control device (1) is connected,
- the input connection (4) connected to the other terminal of the photovoltaic module (2a, 2i) whereto the control device (1) is connected is electrically connected to the input connection (5) connected to the terminal of the photovoltaic module (2b, 2h) adjacent to the photovoltaic module (2a, 2i) whereto the control device (1) is connected,
the photovoltaic module (2a, 2i) whereto the control device (1) is connected being connected in series to the adjacent photovoltaic module (2b, 2h), and therefore electrically forming part of the string.

The switching module (8) also has an activated state, wherein
- the output connection (7) is electrically connected to the input connection (5) connected to the terminal of the photovoltaic module (2b, 2h) adjacent to the photovoltaic module (2a, 2i) whereto the control device (1) is connected,
- the input connection (4) connected to the terminal of the photovoltaic module (2a, 2i) whereto the control device (1) is connected is electrically disconnected from the input connection (5) connected to the other terminal of the adjacent photovoltaic module (2b, 2h),
the photovoltaic module (2a, 2i) whereto the control device (1) is connected being electrically disconnected from the adjacent photovoltaic module (2b, 2h), and therefore electrically disconnected from the string.

It is envisaged that the control device (1) has means of mechanical fixing to the structure of the photovoltaic module (2a, 2i) whereto it is connected, preferably in the form of a stainless-steel support and flange.

This voltage control device (1) and disconnecting photovoltaic modules for string (2) has a characteristic operating method which comprises
- a preliminary step of programming the operating parameters in the internal memory (10) of the control module (9), by means of the PLC-type communications module (12), from an external device, subsequently not requiring the communications for their functionality once installed, which can optionally be used to send information on the operation of the control device (1) to an external monitoring device,
- a step of measuring the voltage (11) supplied by the photovoltaic module (2a, 2i) whereto it is connected by means of the connections (4,6), which is communicated to the control module (9),
- if the value of the measured voltage is higher than that indicated in the operating parameters programmed in the internal memory (10), the control module (9) performs a step of putting the switching module (8) in the activated state, electrically disconnecting the photovoltaic module (2a, 2i) from the string, and therefore reducing the total output voltage of the string of photovoltaic modules (2),
- if the value of the measured voltage is lower than that indicated in the operating parameters programmed in the internal memory (10), the control module (9) performs a step of putting the switching module (8) in the deactivated state, electrically connecting the photovoltaic module (2a, 2i) to the string, and therefore giving the maximum output voltage of the string of photovoltaic modules (2),
cyclically repeating the voltage measurement step, and the following steps.

Any person skilled in the art will easily understand that the characteristics of different embodiments can be combined with characteristics of other possible embodiments whenever such a combination is technically possible.

All the information referring to examples or modes of embodiment form part of the description of the invention.

## Claims

1. - Voltage control device (1) and disconnecting photovoltaic modules for string (2), **characterised in that** it comprises
- a switching module (8),
- a control module (9) equipped with internal memory (10) for the storage of operating parameters,
- a voltage measurement module (11),
- a PLC-type communications module (12),
- a DC power supply module (13) for the above modules, obtained from the voltage generated by the photovoltaic module (2a, 2i) of the string whereto the control device (1) is connected,
- a short-range wireless communications module (14), and
- a plurality of connections comprising at least
two input connections (4,6) to connect to the terminals of the photovoltaic module (2a, 2i) whereto the control device (1) is connected,
an input connection (5) for connecting to the photovoltaic module (2) of the string adjacent to the photovoltaic module (2b, 2h) whereto the control device (1) is connected, and
an output connection (7) for connecting to an inverter (3).

2. - Voltage control device (1) and disconnecting photovoltaic modules for string (2), according to the preceding claim, **characterised in that** its connection to the string is performed in the last photovoltaic module (2), corresponding to the positive output to the inverter (3), with
the input connection (4) connected to the negative terminal of the last photovoltaic module (2i) of the string,
the input connection (6) connected to the positive terminal of the last photovoltaic module (2i) of the string,
the input connection (5) connected to the positive terminal of the penultimate photovoltaic module (2h) of the string, and
the output connection (7) positive and connected to the inverter (3),
the last photovoltaic module (2i) separated from the series connection of the string, and therefore the positive terminal of the penultimate photovoltaic module (2h) and the negative terminal of the last photovoltaic module (2i) of the string are not directly connected to each other.

3. - Voltage control device (1) and disconnecting photovoltaic modules for string (2), according to claim 1, **characterised in that** its connection to the string is performed in the first photovoltaic module (2a), corresponding to the negative output towards the inverter (3), with the
the input connection (4) connected to the positive terminal of the first photovoltaic module (2a) of the string,
the input connection (6) connected to the negative terminal of the first photovoltaic module (2a) of the string,
the input connection (5) connected to the negative terminal of the second photovoltaic module (2b) of the string, and
the output connection (7) negative and connected to the inverter (3),
the first photovoltaic module (2a) separated from the series connection of the string, and therefore the negative terminal of the second photovoltaic module (2b) and the positive terminal of the first photovoltaic module (2a) of the string are not directly connected to each other.

4. - Voltage control device (1) and disconnecting photovoltaic modules for string (2), according to any of the preceding claims, **characterised in that** the switching module (8) has a deactivated state, wherein
- the output connection (7) is electrically connected to the input connection (6) connected to the terminal of the photovoltaic module (2a, 2i) whereto the control device (1) is connected,
- the input connection (4) connected to the other terminal of the photovoltaic module (2a, 2i) whereto the control device (1) is connected is electrically connected to the input connection (5) connected to the terminal of the photovoltaic module (2b, 2h) adjacent to the photovoltaic module (2a, 2i) whereto the control device (1) is connected,
the photovoltaic module (2a, 2i) whereto the control device (1) is connected being connected in series to the adjacent photovoltaic module (2b, 2h), and therefore electrically forming part of the string.

5. - Voltage control device (1) and disconnection of photovoltaic modules for string (2), according to any of the preceding claims, **characterised in that** the switching module (8) has an activated state, wherein
- the output connection (7) is electrically connected to the input connection (5) connected to the terminal of the photovoltaic module (2b, 2h) adjacent to the photovoltaic module (2a, 2i) whereto the control device (1) is connected,
- the input connection (4) connected to the terminal of the photovoltaic module (2a, 2i) whereto the control device (1) is connected is electrically disconnected from the input connection (5) connected to the other terminal of the adjacent photovoltaic module (2b, 2h),
the photovoltaic module (2a, 2i) whereto the control device (1) is connected being electrically disconnected from the adjacent photovoltaic module (2b, 2h), and therefore electrically disconnected from the string.

6. - Voltage control device (1) and disconnecting photovoltaic modules for string (2), according to any of the preceding claims, **characterised in that** the switching module (8) is chosen from the group formed by electromechanical or solid state.

7. - Voltage control device (1) and disconnecting photovoltaic modules for string (2), according to any of the preceding claims, **characterised in that** the control device (1) has means of mechanical attachment to the structure of the photovoltaic module (2a, 2i) whereto the control device (1) is connected.

8. - Voltage control device (1) and disconnecting photovoltaic modules for string (2), according to claim 8, **characterised in that** the means of mechanical fixing of the control device (1) to the structure of the photovoltaic module (2a, 2i) whereto the control device (1) is connected consist of a support and a stainless-steel flange.

9. - Method of operation of a voltage control device (1) and disconnecting photovoltaic modules for string (2), according to any of the preceding claims, **characterised in that** it comprises
- a preliminary step of programming the operating parameters in the internal memory (10) of the control module (9), by means of the PLC-type communications module (12), from an external device,
- a step of measuring the voltage (11) supplied by the photovoltaic module (2a, 2i) whereto it is connected by means of the connections (4,6), which is communicated to the control module (9),
- if the value of the measured voltage is higher than that indicated in the operating parameters programmed in the internal memory (10), the control module (9) performs a step of putting the switching module (8) in the activated state, electrically disconnecting the photovoltaic module (2a, 2i) from the string, and therefore reducing the total output voltage of the string of photovoltaic modules (2),
- if the value of the measured voltage is lower than that indicated in the operating parameters programmed in the internal memory (10), the control module (9) performs a step of putting the switching module (8) in the deactivated state, electrically connecting the photovoltaic module (2a, 2i) to the string, and therefore giving the maximum output voltage of the string of photovoltaic modules (2),
the communications module (12) sending information on the operation of the control device (1) to an external monitoring device and
cyclically repeating the voltage measurement step, and the following steps.
